# EUROPEAN PATENT SPECIFICATION

(11) **EP 2 883 673 B1**
(45) Date of publication and mention of the grant of the patent: **06.05.2020**
(21) Application number: 15151689.5
(22) Date of filing: 30.01.2007
(51) Int. Cl.: B29C 44/56, B29C 44/32

(54) **METHOD FOR MANUFACTURING A PHENOLIC FOAM BODY**
VERFAHREN ZUR HERSTELLUNG EINES PHENOLHARZSCHAUMSTOFFKÖRPERS
PROCÉDÉ DE PRODUCTION D'UN CORPS DE MOUSSE PHÉNOLIQUE

(30) Priority: 30.01.2006 IE 20060062
(43) Date of publication of application: 17.06.2015
(62) Divisional of application: 07705990.5
(73) Proprietor: Kingspan Holdings (IRL) Limited, Kingscourt, County Cavan (IE)
(72) Inventor: Coppock, Vincent, Bunbury, Cheshire CW6 9SJ (GB); Zeggelaar, Ruud, NL-6814 JK Arnhem (NL); Wenham, Richard, Hereford, HR4 9JR (GB); Hobbs, Linzi, Bitterley, SY8 3HF (GB)
(74) Representative: Tomkins & Co

(56) References cited:
- WO-A-92/22420
- FR-A1- 2 228 607
- US-A1- 2005 183 903
- M. ALVAREZ-LAINEZ ET AL: "Thermal conductivity of open-cell polyolefin foams", JOURNAL OF POLYMER SCIENCE PART B: POLYMER PHYSICS, vol. 46, no. 2, 1 January 2007 (2007-01-01), pages 212-221, XP055591879, US ISSN: 0887-6266, DOI: 10.1002/polb.21358

## Description

### Introduction

Phenolic foam is used in insulation applications for construction materials because of its superior thermal insulation and fire properties including low smoke emission and good fire resistance.

Phenolic foam is generally produced by expanding and curing a foamable composition prepared by uniformly mixing a resole resin, (obtained by a poly condensation reaction of phenol and formaldehyde in the presence of an alkaline catalyst), a blowing agent (generally a volatile liquid or gas with a lower thermal conductivity than air), a surfactant, and a curing catalyst. Other additives can optionally be mixed into the resin such as plasticisers, flame retardants and pigments.

Foam insulation panels often have gas impermeable facings such as foil facings. These facings are bonded to the foam core by making use of the inherent adhesive ability of the foaming resin without the need for additional adhesives. This is known as autohesive bonding. Gas impermeable facings such as aluminium foil facings are used to reduce the emissivity of the product. Emissivity is the ratio of energy emitted by the facing to the energy emitted by a perfect black body, a low value indicating good heat reflection of the facing, which contributes to the insulation value of the final product.

During the polymerisation reaction of phenol and formaldehyde, a significant amount of water will be formed. This water has to be removed by drying to obtain a product with good dimensional stability, usually in a separate drying or curing step at elevated temperature. When gas impermeable facings are used, for example, aluminium foils, very long curing times will be needed to dry the product. Very high temperatures (i.e. above 100°C) cannot be used for curing of these products as the vaporised water will cause excessive pressure in the closed cells of the foam leading to rupture of these cells and loss of blowing agent, which leads to relatively poor insulation values as the blowing agent is replaced by air.

In practice, the curing time of an insulation panel faced on both sides with non gas-permeable facings will depend on the product thickness. Insulation panels with gas impermeable facings will take more than 3 times longer to dry and cure than a panel with a gas permeable facing.

US 2005/0183903 describes an integrated noise suppression acoustic panel includes a back plate, a face plate, and a bulk foam absorber disposed between the back plate and the face plate. The bulk foam absorber is formed of a thermoset material, such as bismaleimide or phenolic, and is manufactured using a low pressure process. In particular, a foamable material is melted, and a blowing agent is mixed with the foamable material to obtain a mixture. The foam is formed and the mixture is cured by heating it to a temperature, and maintaining the mixture at the temperature for a time sufficient to cure the mixture.

Products faced with non gas-permeable facings such as aluminium foils which are adhesively bonded to the product, after curing, are not commercially viable in view of the added handling costs involved.

### Statements of Invention

The phenolic foam thermal insulation products formed by the method of the invention have perforations in gas-impermeable facing material. These perforations reduce the drying and curing time when compared with gas permeable faced products. The aged thermal conductivity of such products is also improved. The perforations are made in a gas-impermeable facing material prior to manufacture of the phenolic insulation board. The phenolic foam insulation board has an aged thermal conductivity of less than 0.02 W/m.K when faced on both sides with perforated gas-impermeable facing materials which are autohesively bonded during manufacture. The perforations are between 0.05 and 2 mm in diameter and may be spaced from 2 mm to 50 mm apart. The perforations are typically between 0.1 and 1.5 mm diameter and are spaced from 3 mm to 30 mm apart.

The perforations can be made from one or both sides of the facing.

The perforations may be of any shape and may be made using a tool which is, for example, tubular, conical or pyramidal in shape. A pyramidal spiker may create an X-shaped perforation with a width of typically 1.0 mm with centres of typically 3.8 mm.

According to the invention there is provided a method of forming a rigid phenolic insulating foam body having pre-perforated facings as set out in the claims.

In one embodiment the facing comprises a substantially gas impermeable material. The facing may comprise a metallic foil such as an aluminium foil. The facing may be a laminate such as a metallic foil laminated onto a glass tissue or a metallic foil laminated onto a Kraft paper.

A facing is applied to both the upper and the lower faces of the board.

The invention provides a method for manufacturing a foam body comprising the steps of: -
leading a base facing of a pre-perforated substantially gas impermeable material to a lay down area wherein the perforations are between 0.05 and 2 mm in diameter and are spaced from 2 mm to 50 mm apart;
laying liquid phenolic foam reactants down on the base facing;
leading an upper facing of a pre-perforated substantially gas impermeable material wherein the perforations are between 0.05 and 2 mm in diameter and are spaced from 2 mm to 50 mm apart over the liquid phenolic foam reactants ;
forming a foam body by bonding using the foam the upper and lower facers (1) to the foam without bleed through of the liquid phenolic foam reactants
leading the sandwich thus formed through an oven; and
cutting the foam board thus formed to a desired length.

Both of the facings are pre-perforated.

Both facings comprise a substantially gas impermeable material. A facing may comprise a metallic foil such as an aluminium foil. A facing may be a laminate such as a metallic foil laminated onto a glass tissue or a metallic foil laminated onto a Kraft paper.

### Brief Description of the Drawings

The invention will be more clearly understood from the following description thereof given by way of example only with reference to the accompanying figures, in which:
Figs. 1(a) and 1(b) are schematic views showing perforation patterns for pre-perforated facings;
Fig. 2 is a schematic view showing another perforation pattern;
Fig. 3 is a diagram illustrating the formation of perforations in a facing using a spiked roller;
Fig. 4 is a plan view of a perforated facing;
Fig. 5 is a perspective view of the perforated facing;
Fig. 6 is another diagram illustrating the formation of perforations in a facing;
Figs. 7(a) and 7(b) are diagrams illustrating the formation of perforations in facings;
Fig. 8 is a diagram of a foam board with pre-perforated facings;
Fig. 9 (which is outside the scope of the claims) is a side view illustrating the formation of perforations in the facings of a foam board; and
Fig. 10 (which is outside the scope of the claims) is a cross sectional view illustrating the formation of perforations using the apparatus of Fig 9.

### Detailed Description

It has been surprisingly found that the presence of small perforations in a gas impermeable facing, will result in a shortened insulation board drying (curing) time following production of the board. This shortened drying time is comparable with the drying time taken for foam insulation products of the same thickness that have gas permeable facings such as glass fibre facings.

The perforations are made in the facings of the phenolic foam insulation panel before the foam is applied to the facings. In the facings which are perforated before the foam is applied, the hole size and spacing is carefully selected (typically between 0.1 and 1.5 mm, generally less than 1 mm) to avoid bleed-through of the liquid pre-polymer.

### Example 1:

In this case, the perforations are made in the facing itself, before the foaming process.

For this purpose, two different facings were perforated and used to make foam panels. The first facing consisted of an aluminium foil laminated onto glass tissue.

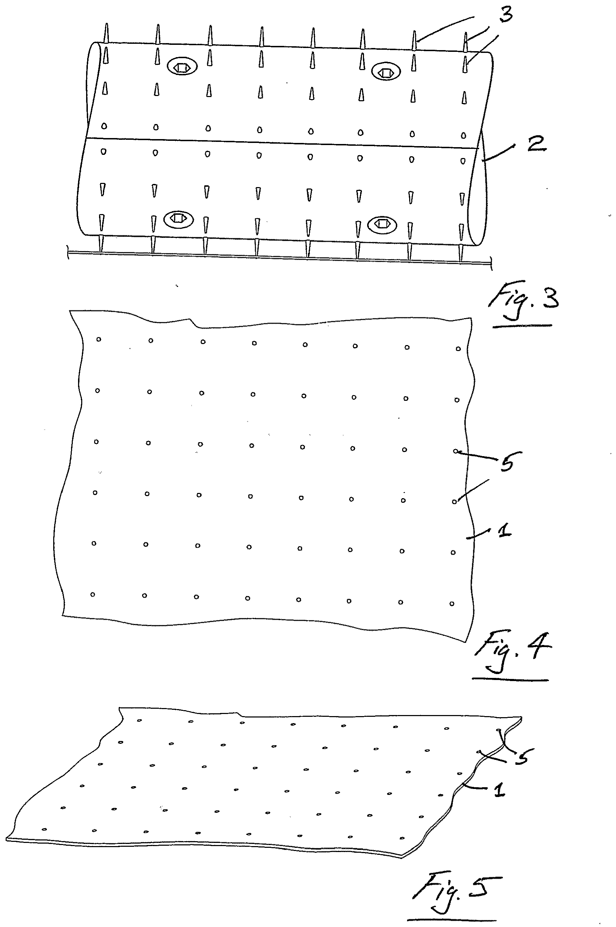

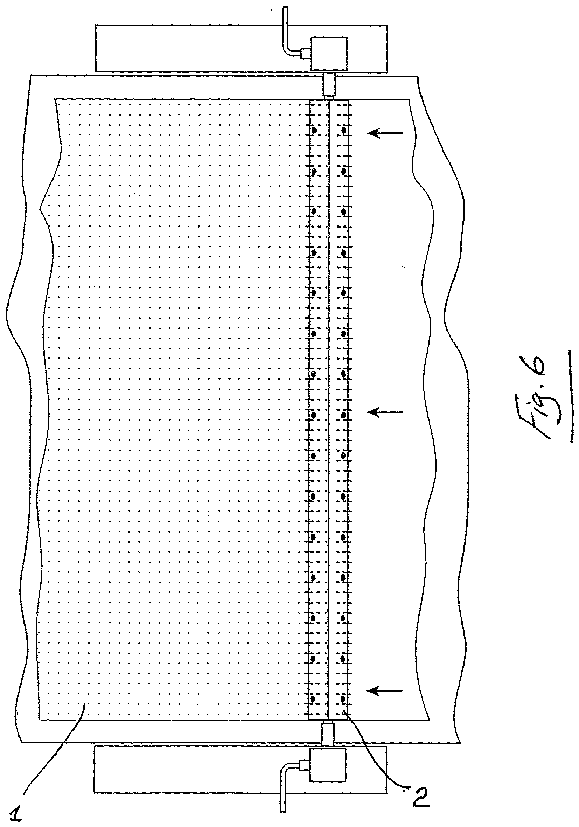

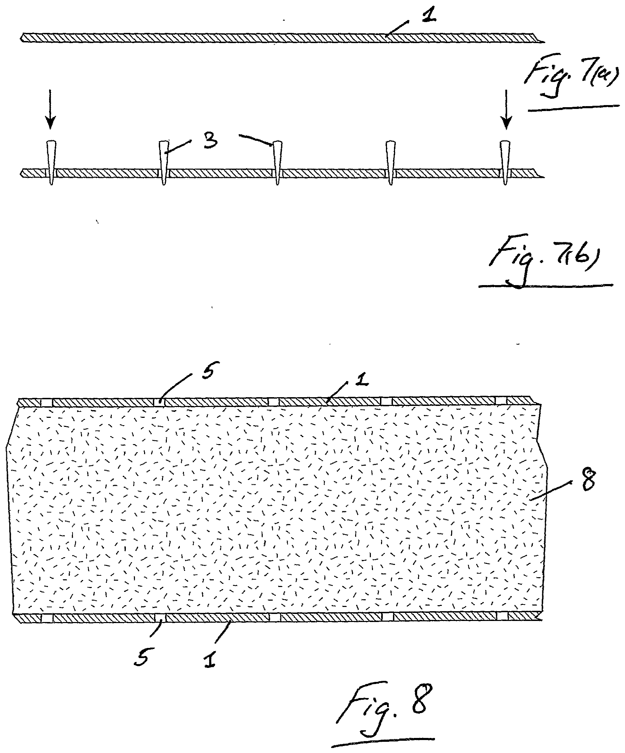

Referring to Figs 3 to 8 the facings 1 may be perforated using a spiked roller 2 with a plurality of spikes 3 which form a plurality of perforations 5 in the facing 1. A spiked roller is described in GB-A-2,383,971.

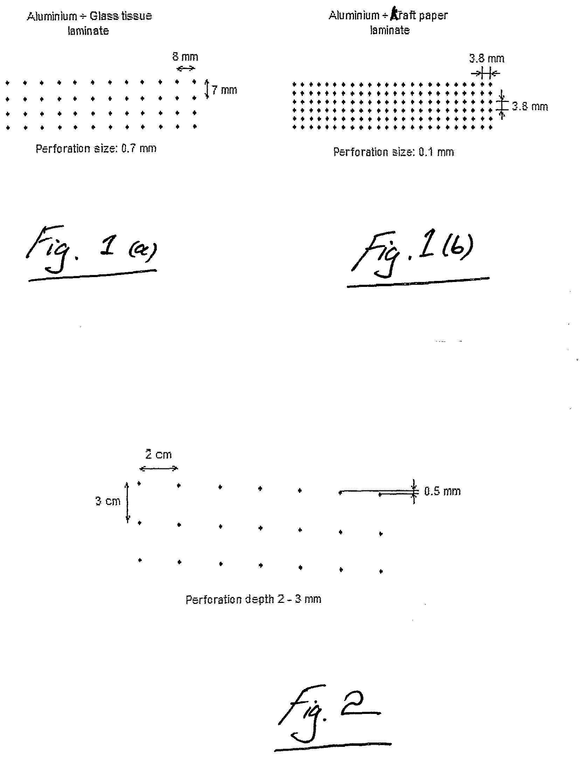

The perforation pattern for the aluminium-glass fibre facing, and the perforation size of 0.7mm are given in Figure 1(a).

With both facings perforated, phenolic foam insulation panels 8 with a thickness of 50 mm were produced.

Phenol formaldehyde foam insulation boards, with a thickness of 50mm, were produced with gas impermeable facings comprising aluminium foil laminated onto glass tissue. The perforated facing was used as a facing on both sides. According to the process for producing phenolic foam of the present invention, a foamable phenolic resin composition is discharged on to a continuous running perforated facing and passed through a heated zone for foaming and moulding into phenolic foam products of predetermined shape. In this manufacturing process, the phenolic resin composition that has been discharged on to the running perforated facing material supported by a conveyor belt that passes into a heated oven typically at 50 to 100°C for approximately 2 to 15 minutes. The top surface of the rising foam composition is pressed down with another perforated facing material carried by an upper conveyor belt. The thickness of the foam is controlled to the required predetermined thickness. The phenolic foam leaving the oven is then cut to a predetermined length.

Using the same process as described above a foam board was produced using facings comprising a Kraft paper - aluminium foil laminate. The perforation pattern for the aluminium-Kraft paper facing, and the perforation size of 0.1mm are given in Figure 1(b).The facings may be perforated using a helical spiked roller as described above. The perforated facing was used as a facing on both sides.

As a control reference, samples of the same thickness panel were made with the same facings but were non-perforated. These samples were dried in an oven at 80°C for 5 hours.

Table 1 shows the weight loss of the product after 5 hours of drying at 80°C

**Table 1: Weight loss for perforated and non-perforated facings for panel thickness 50 mm.**

| Description | Weight loss [%] |
|---|---|
| Perforated Aluminium kraft paper laminate (perforation size 0.1 mm diameter) | 7.5 |
| Non perforated Aluminium kraft paper laminate | 4.6 |
| Perforated Aluminium glass tissue laminate (0.7 mm diameter) | 10.8 |
| Non perforated Aluminium glass tissue laminate | 4.7 |

Perforation of the foils results in an increase of the drying rate of foam panel products. A perforation size of 0.1 mm approximately doubles the drying rate.

The process of the invention includes pre-perforation of the facings as described in Example 1 because this has the advantage of eliminating the occasional formation of gas blisters between the facing and the foam surface. These blisters can occur when manufacturing with a gas-tight facing and result when gas is released from the foam during processing (from water vapour or blowing agent) which cannot escape through the gas-impermeable facing, and results in a gas bubble between the facing and the foam surface with loss of facing adhesion in that area. These blisters can vary in size from a few mm diameter to tens of centimetres and are undesirable both aesthetically and in their reduction of facing tensile properties.

### Example 2: (Outside the scope of the claims)

Phenol formaldehyde foam insulation boards, with a thickness of 80mm, were produced with a gas impermeable two-layer aluminium foil - glass fibre tissue laminate facing on both sides. The assembly of this two-layer facing was arranged such that the glass fibre layer of the two-layer facing was bonded to the phenolic foam. A foamable phenolic resin composition is discharged on to a continuous running facing and passed through a heated zone for foaming and moulding into phenolic foam products of predetermined shape. In this manufacturing process, the phenolic resin composition that has been discharged on to the running facing material supported by a conveyor belt that passes into a heated oven typically at 50 to 100°C for approximately 2 to 15 minutes. The top surface of the rising foam composition is pressed down with another facing material carried by an upper conveyor belt. The thickness of the foam is controlled to the required predetermined thickness. The phenolic foam leaving the oven is then cut to a predetermined length.

Thereafter, one of these foam insulation panels was perforated on one side using a helical spiked roller as described in GB-A-2,383,971. The pattern and depth of the perforations is given in Figure 2. The diameter of each of the perforations is approximately 0.5 mm.

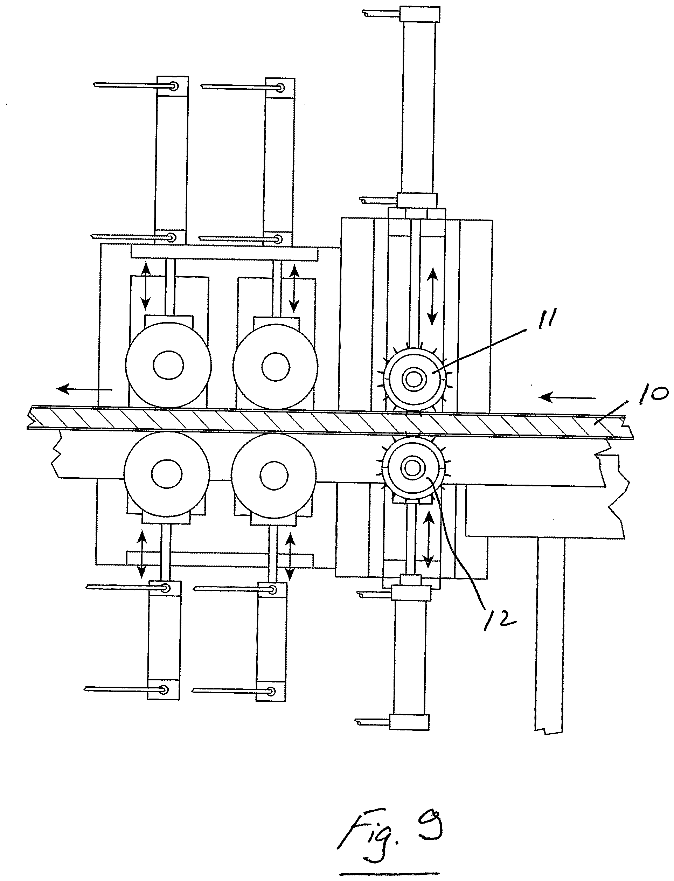

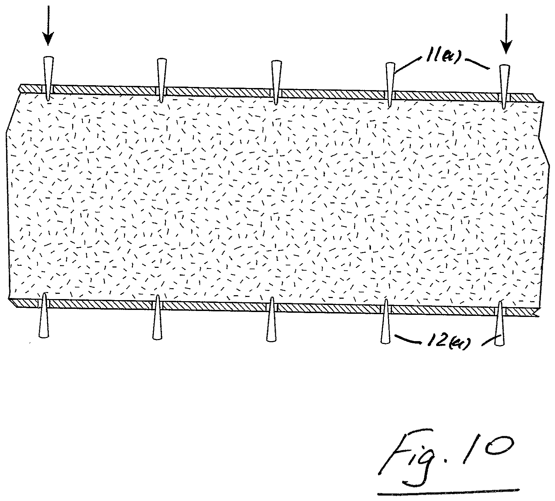

Another 80mm thick phenol formaldehyde foam insulation panel, which had been faced on both sides with the same aluminium foil -glass fibre tissue facing was perforated on both sides, according to the pattern given in Figure 2 using the same helical spiker device. This arrangement is illustrated in Figs 9 and 10 in which a foam board 10 is passed between two helical spiked rollers 11,12 with spikes 11a, 12a to form a foam board 13 with facings 14,15 on both sides. Both of the facings 14,15 are perforated.

These perforated samples together with a sample of phenolic foam panel which had on both sides of the panel the same aluminium foil - glass tissue facing but without perforations and an insulation panel faced with gas permeable plain glass tissue were placed in an oven at 70°C. After 4, 8 and 12 hours, the weight loss of these samples was determined.

Table 2 gives the weight loss of these four samples as function of the drying time

**Table 2: Weight loss as function of the drying time**

| Description | Data | | |
|---|---|---|---|
| Product thickness [mm] | 80 | 80 | 80 |
| Drying time [hours] | 4 | 8 | 12 |
| Drying temperature [°C] | 70 | 70 | 70 |
| Weight loss of double sided aluminium foil - glass tissue faced product with no perforations [w%] | 0.45 | 0.72 | 1.16 |
| Weight loss of double sided aluminium foil - glass tissue faced product with single side of perforations [w%] | 2.75 | 4.04 | 5.48 |
| Weight loss of double sided aluminium foil - glass tissue faced product with double side perforations [w%] | 4.11 | 6.95 | 8.86 |
| Weight loss of double sided glass tissue faced product (reference sample) [w%] | 3.96 | 6.81 | 8.70 |

Table 2 shows that the weight loss of the double-sided perforated product is comparable to the weight loss of the product faced with a gas permeable facing such as fibreglass tissue.

Table 3 shows the physical properties of these 80 mm thick samples after 8 hours of drying at 70°C. All measurements are performed according to EN 13166 2001.

**Table 3: Physical properties of perforated products.**

| Description | Compressi ve Strength | Delaminatio n Strength | Initial Thermal Conductiv ity 4 days at 70°C | Thermal Conductiv ity after 25 weeks at 70°C + 23°C/50% RH |
|---|---|---|---|---|
| | [kPa] | [kPa] | [W/m.K] | [W/m.K] |
| Double sided aluminium foil - glass fibre tissue faced product (no perforations) | 171 | 85 | 0.0194 | 0.0211 |
| Double sided aluminium foil - glass fibre tissue faced product (single sided perforations) | 164 | 92 | 0.0185 | 0.0194 |
| Double sided aluminium foil - glass fibre tissue faced product (double sided perforations) | 175 | 102 | 0.0185 | 0.0195 |
| Double sided glass tissue (reference sample) | 169 | 95 | 0.0180 | 0.0190 |

The compressive strength is comparable for all products.

Perforating the facing seems to improve the delamination strength slightly.

The thermal conductivity after accelerated ageing for the perforated product is comparable with the product with a gas permeable facing. The initial thermal conductivity of the product faced with a perforated aluminium- glass fibre tissue is slightly higher. This is due to the aluminium facing, which gives slightly higher readings in the thermal conductivity measuring instrument. [Fox Laser comp 314]

The product without perforations gave higher initial thermal conductivity and the increase in thermal conductivity following thermal ageing is higher compared to the perforated product.

### Example 3: (Outside the scope of the claims)

Phenolic foam was produced with a thickness of 40 mm. In the same way as in Example 2, the product was faced on both sides with a gas impermeable two layer aluminium-glass tissue facing. This insulation panel sample was then perforated on one side as described above. The pattern and depth of the perforations is shown in Figure 2.

As with Example 2, these samples were placed in a drying oven and conditioned at 70°C. Alongside this sample was a reference sample which was non- perforated. Also present in this evaluation was a sample that was faced with plain glass tissue.

Table 4 gives the weight loss of these three samples as function of the drying time

**Table 4: Weight loss as function of the drying time (product thickness 40 mm)**

| Description | Data | | | |
|---|---|---|---|---|
| Product thickness [mm] | 40 | 40 | 40 | 40 |
| Drying time [hours] | 1 | 2 | 3 | 4 |
| Drying temperature [°C] | 70 | 70 | 70 | 70 |
| Weight loss double sided aluminium foil-glass fibre faced product no perforations [w%] | 0.14 | 0.17 | 0.21 | 0.52 |
| Weight loss double sided aluminium foil-glass fibre faced product single sided perforated [w%] | 1.21 | 2.78 | 3.36 | 4.20 |
| Glass tissue (reference sample) [w%] | 3.04 | 4.45 | 4.94 | 5.93 |

Table 4 shows that the weight loss of the single sided perforated product is much higher compared to the weight loss of the product faced with an impermeable facing.

Table 5 shows the product properties of these 40 mm thick samples after 4 hours of drying at 70°C

All measurements are performed according to EN13166 2001.

**Table 5: Physical properties perforated product (product thickness 40 mm).**

| Description | Compressive Strength | Delaminatio n Strength | Thermal Conductiv ity Initial | Thermal Conductiv ity after 25 weeks at 70°C |
|---|---|---|---|---|
| | [kPa] | [kPa] | [W/m.K] | [W/m.K] |
| Weight loss double sided aluminium foil-glass fibre faced product (no perforations) | 162 | 89 | 0.0197 | 0.0201 |
| Weight loss double sided aluminium foil-glass fibre faced product (single sided perforated) | 152 | 84 | 0.0188 | 0.0196 |
| Glass tissue (reference sample) | 169 | 87 | 0.0177 | 0.0188 |

The invention is not limited to the embodiments hereinbefore described which may be varied in detail.

## Claims

1. A method for manufacturing a phenolic foam body (8) having an aged thermal conductivity of less than 0.02 W/m.K **characterised in** the method comprising the steps of:
leading a first or base facer (1) of a pre-perforated substantially gas impermeable material to a laydown area wherein the perforations are between 0.05 and 2 mm in diameter and are spaced from 2 mm to 50 mm apart;
laying liquid phenolic foam reactants down on the base facer (1);
leading a second or upper facer (1) of a pre-perforated substantially gas impermeable material wherein the perforations are between 0.05 and 2 mm in diameter and are spaced from 2 mm to 50 mm apart over the liquid phenolic foam reactants;
forming a foam body including the upper and lower facers (1) by bonding using the foam the upper and lower facers (1) to the foam without bleed through of the liquid phenolic foam reactants;
leading the sandwich thus formed through an oven; and
cutting the foam body thus formed to a desired length.

2. A method as claimed in claim 1 wherein the first and/or the second facer (1) comprises a metallic foil.

3. A method as claimed in claim 1 or 2 wherein the first and/or the second facer (1) comprises an aluminium foil.

4. A method as claimed in any of claims 1 to 3 wherein the first and/or the second facer (1) is a laminate.

5. A method a claimed in claim 4 wherein the laminate comprises a metallic foil laminated onto a glass tissue.

6. A method as claimed in claim 4 wherein the laminate comprises a metallic foil laminated onto a Kraft paper.

## Patentansprüche

1. Verfahren zur Herstellung eines Phenolschaumstoffkörpers (8) mit einer gealterten Wärmeleitfähigkeit von weniger als 0,02 W/m.K, wobei das Verfahren **gekennzeichnet ist durch** die folgenden Schritte:
Führen einer ersten oder Grundbahn (1) aus einem vorperforierten, im wesentlichen gasundurchlässigen Material zu einem Ablagebereich, wobei die Perforationen zwischen 0,05 und 2 mm im Durchmesser sind und voneinander zwischen 2 mm und 50 mm beabstandet sind;
Auflegen von flüssigen Phenolschaumreaktanten auf die Grundbahn (1); Führen einer zweiten oder oberen Bahn (1) aus einem vorperforierten, im wesentlichen gasundurchlässigen Material über die flüssigen Phenolschaumreaktanten, wobei die Perforationen zwischen 0,05 und 2 mm im Durchmesser sind und voneinander zwischen 2 mm und 50 mm beabstandet sind;
Bilden eines Schaumkörpers einschließlich der oberen und unteren Bahnen (1) durch Verbinden der oberen und unteren Bahnen (1) mit dem Schaum unter Verwendung des Schaums, ohne dass die flüssigen Phenolschaumreaktanten durchbluten;
Führen des so gebildeten Sandwichs durch einen Ofen; und
Schneiden des so gebildeten Schaumstoffkörpers auf eine gewünschte Länge.

2. Verfahren nach Anspruch 1, wobei die erste und/oder die zweite Bahn (1) eine Metallfolie umfasst.

3. Verfahren nach Anspruch 1 oder 2, wobei die erste und/oder die zweite Bahn (1) eine Aluminiumfolie umfasst.

4. Verfahren nach einem der Ansprüche 1 bis 3, wobei die erste und/oder die zweite Bahn (1) ein Laminat ist.

5. Verfahren nach Anspruch 4, wobei das Laminat eine Metallfolie umfasst, die auf ein Glasgewebe laminiert ist.

6. Verfahren nach Anspruch 4, wobei das Laminat eine Metallfolie umfasst, die auf ein Kraftpapier laminiert ist.

## Revendications

1. Un procédé de fabrication d'un corps en mousse phénolique (8) ayant une conductivité thermique vieillie inférieure à 0.02 W/m.K, **caractérisé en ce que** le procédé comprend les étapes consistant à:
- amener un premier parement ou parement de base (1) d'un matériau pré-perforé sensiblement imperméable aux gaz dans une zone de couchage dans lequel les perforations ont un diamètre compris entre 0.05 et 2 mm et sont espacées de 2 mm à 50mm;
- déposer des réactifs de mousse phénolique liquide sur le parement de base (1);
- amener sur les réactifs de mousse phénolique liquide un deuxième parement ou parement supérieure (1) d'un matériau pré-perforé sensiblement imperméable aux gaz dans lequel les perforations ont un diamètre compris entre 0.05 et 2 mm et sont espacées de 2mm à 50mm;
- former un corps en mousse incluant les parements supérieure et inférieure (1) par liaison, en utilisant la mousse, des parements supérieure et inférieure (1) sans infiltration des réactifs de mousse phénolique liquide;
- faire passer le sandwich ainsi formé à travers un four; et
- couper le corps en mousse ainsi formé à une longueur souhaitée.

2. Un procédé selon la revendication 1, dans lequel le premier et/ou le deuxième parement (1) comprend une feuille métallique.

3. Un procédé selon la revendication 1 ou 2, dans lequel le premier et/ou le deuxième parement (1) comprend une feuille d'aluminium.

4. Un procédé selon l'une quelconque des revendications 1 à 3, dans lequel le premier et/ou le deuxième parement (1) consiste en un stratifié.

5. Un procédé selon la revendication 4, dans lequel le stratifié comprend une feuille métallique stratifiée sur un tissu de verre.

6. Un procédé selon la revendication 4, dans lequel le stratifié comprend une feuille métallique stratifiée sur un papier Kraft.
